# EUROPEAN PATENT APPLICATION

(11) **EP 1 303 072 A2**
(43) Date of publication of application: **16.04.2003**
(21) Application number: 02079507.6
(22) Date of filing: 15.10.2002
(51) Int. Cl.: H04L 1/16

(54) **Improved ADSL downloading with priority transmit queue**

(30) Priority: 15.10.2001 US 328785 P
(71) Applicant: Texas Instruments Incorporated, Dallas, Texas 75251 (US)
(72) Inventor: Tang, Zhicheng, Plano, Texas 75025 (US); Tang, Jun, San Jose, CA 95129 (US)
(74) Representative: Holt, Michael

(57) **Abstract**

An improved ADSL system and system for downloading and uploading data packets between a server and a client is provided by the client having a normal first-in-first-out queue 42 for sending uploading data to said server and a separate priority first-in-first-out 43 queue for sending acknowledgments back to said server to enable the server to send more download data. The client determines if the priority queue is empty and sends the data packets only when the priority queue is empty.

## Description

### FIELD OF INVENTION

This invention relates to Asymmetrical Digital Subscriber Lines (ADSL) and more particularly to improved downloading during simultaneously uploading and downloading with an additional priority transmit queue for TCP acknowledgment packets

### BACKGROUND OF INVENTION

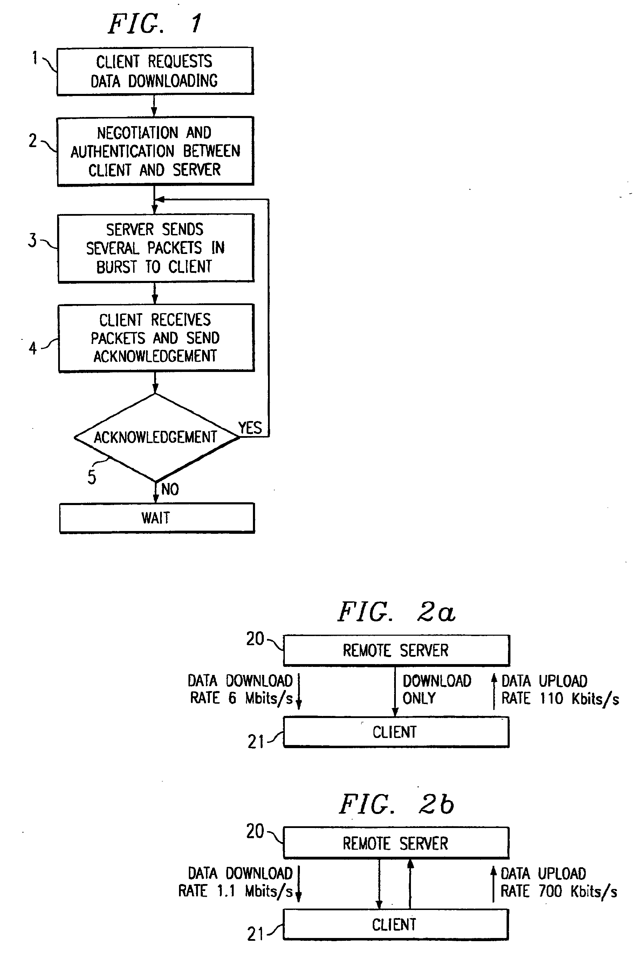

The Transmission Control Protocol/Internet Protocol (TCP/IP) is widely used in such Internet activity as web surfing (HTTP), file downloading, (File Transfer Protocol or FTP), Single Mail Transfer Protocol SMTP), Telnet, Domain Name System (DNS), Windows Internet System (WINS), and etc. all require acknowledgement when data is received. For example in file downloading, a client requests a file download from a FTP server. After negotiation, the server sends a burst of network packets to the client and waits for acknowledgement from the client. Upon receiving the acknowledgement from the client, the server will send another burst of packets and wait for acknowledgement. The process goes on until all requested data are downloaded. Figure 1 is a flow chart that illustrates the process. In the process steps as illustrated in Figure 1 the process starts with in step 1 the client requests the downloading. TCP/IP is a layered protocol wherein after an application initiates the communication (the client in this case) the message (data) to be transmitted is passed through a number of stages or layers until it is physically send over wire for example. The data is packaged with a different header at each layer. At the receiver (the server in this case) the corresponding programs at each protocol layer unpackage the data moving through the layers in the reverse direction or back up the stack to the receiving system. The top layer 7 is the application layer which initiates the communication. There are several application layer protocols for file transfer, mail, remote access, authentication, etc. In step 2 there is the negotiation and authentication between the client and the server. The server sends several packets to the client in step 3 and in step 4 and 5 the client receives packets and sends an acknowledgement. If there is no acknowledgement returned sent the system waits until one is sent and then the server sends more packets. This is repeated until all the message packets are sent.

Since there is no other activity going, the majority of the network packets sent by the client to the server are acknowledgement packets (Ack Packets). Though even in an asymmetric data transfer device such as ADSL modem, the above described file download process download can proceed without much problem.

In a test, one can achieve above 6 Mbits/s FTP data download rate (down stream rate) with an ADSL modem connected at 8.1 Mbits/s download and 800 Kbits/s physical rate. The actual upstream data transfer rate is clocked at 102 Kbits/s.

If during file download process, the client starts another process to upload file from client to server, the down stream data rate drops to 1.1 Mbits/s, even though the physical rate is still 8 Mbits/s for down stream and 800 Kbits/s. The above observation is illustrated in Figures 2a and 2b.

Referring to Figure 2a there is illustrated the remote server 20 with a FTP file download only to client 21. Downloading with a download rate of 6 Mbits/s and a data upload rate of 110 kbits/s. In Figure 2b there is illustrated the FTP down load from server 20 to the client 21 and upload from the client 21 to the server 20 at the same time where the data upload rate is 700 Kbits/s and the download rate is only 1.1 Mbits/s. The reasons for degraded downstream performance in ADSL like asymmetric transfer device are that upstream speed is much lower than downstream speed, in our ADSL case, 8 Mbytes/s download rate vs. 800 Kbytes/s upload rate.

In the simultaneous downloading and uploading situation, the acknowledgement packets (Ack Packets) from the client to server have to compete with data packets from the client to the server for the limited upstream bandwidth. It now takes longer for the acknowledgement packets (Ack Packets) from the client to reach the server, which in turn, slows down the data transfer from the server to the client as described in above in a TCP/IP protocol since new packets are not sent until the acknowledgement packets are received.

### SUMMARY

In accordance with one embodiment of the present invention an improved downloading during simultaneously uploading and downloading is provided by an additional priority transmit queue for TCP acknowledgment packets.

### DESCRIPTION OF DRAWING

Figure 1 illustrates the prior art down loading process.
Figure 2a illustrates an FTP file download only.
Figure 2b illustrates an FTP file download and upload at the same time.
Figure 3 illustrates a first in first out queue in the prior art.
Figure 4 illustrates the queuing process according to one embodiment of the present invention.
Figure 5 illustrates the physical layer data sending process.

### DESCRIPTION OF PREFERRED EMBODIMENT

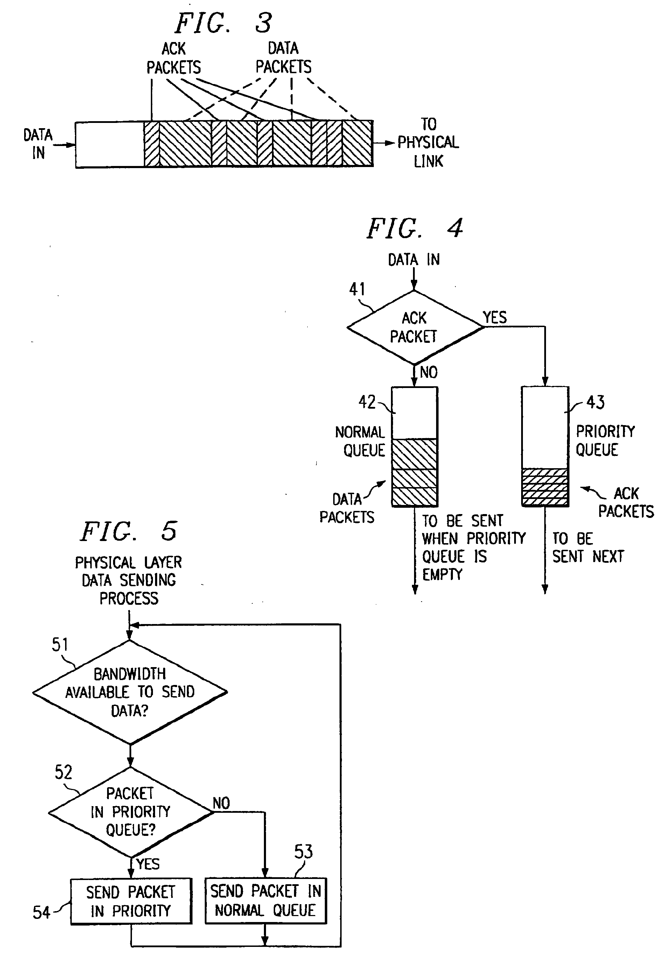

In typical network device driver implementation, the network packets are sent in a first-in-first-out fashion. The driver queues the packets to be sent in a first-in-first-out queue and sends packets to physical link from the beginning of the queue as illustrated in Figure 3. As illustrated in Figure 3, if there is data packet in the queue, the acknowledgement packet (Act packets) has to wait until the data packet in front get sent before the acknowledgement packet can be sent.

In accordance with one embodiment of the present there is provided two transmit first-in-first-out queues per connection. One of the queues has priority over the other one, that is, if there is a packet in the priority queue, it will be sent to physical link layer when available regardless how long the packets have been queued in other normal queue. The driver will check all packets to be sent, if it finds a TCP Ack packet, it will queue the Ack packet in the priority queue and be sent next if there is no other TCP Ack packet in the priority queue. The process is illustrated in Figure 4. The data to be sent upstream to the server for example is the data input in Figure 4. It is determined at stage 41 if the input data is an acknowledgement packet by examining the header. If not it is placed in the normal queue 42 of packets that outputs on a first-in-first out (FIFO) basis. If it is an acknowledgement packet it is placed in the priority queue 43. The priority queue 43 is also a first-in-first-out (FIFO) queue. If the priority queue contains acknowledgement packets they are sent in order on the FIFO basis. The normal data packets are enabled when the priority queue is empty.

Figure 5 illustrates the physical layer data sending process. The system determines if the bandwidth is available to send data in Step 51, In the next step 52 it is determined if there is a packet in the priority queue 43. If so the acknowledgement in the priority queue 43 is sent as represented by step 54. If no packet in the priority queue 43 then the data packet is sent from the normal queue 42 as represented by step 53.

In experiment with TI AP5 DSL modem and Windows 2000 driver implemented with above invention, the actual data download rate increased from 1. 1 Mbits/s to 1.8 Mbits/s. A total over 60% improvement had been achieved.

## Claims

1. A method of simultaneously uploading and downloading data comprising the step of:
sending any acknowledgements of received downloading before sending other uploading data.

2. The method of Claim 1 wherein said acknowledgements are placed in a first-in-first-out priority queue.

3. The method of Claim 2 wherein said other uploading data is placed in a first-in-first-out queue that sends uploading data when there is no data in the first-in-first-out priority queue.

4. A method of simultaneously uploading and downloading comprising the steps of:
providing a priority queue and a normal queue at a client for uploading to a server wherein said priority queue is for uploading acknowledgements and said normal queue is for uploading data;
sending download requests from a client;
negotiating and authenticating between said client and a server; sending packets to said client;
receiving packets at said client; and
sending acknowledgement of receipt of packets at said client from said client to said server from said priority queue before sending data from said normal queue.

5. The method of Claim 4 wherein said normal queue and said priority queue are first-in-first-out queues.

6. The method of Claim 4 wherein said sending acknowledgement step includes the step of determining if the prior queue is empty before sending data from said normal queue.

7. An ADSL system for downloading and uploading data packets comprising:
a server and a client;
said client having a normal queue for sending uploading data to said server and a priority queue for sending acknowledgment back to said server to enable the server to send more download data; and
said client sending uploading data from said normal queue only when there is no acknowledgement in the priority queue to be sent from the client to said server.

8. The system of Claim 7 wherein said priority queue is a first-in-first-out priority queue.

9. The system of Claim 7 wherein said normal queue for sending data is a first-in-first out queue.

10. The system of Claim 7 wherein said client includes means for determining if the priority queue is empty.
